# EUROPEAN PATENT SPECIFICATION

(11) **EP 4 554 078 B1**
(45) Date of publication and mention of the grant of the patent: **24.12.2025**
(21) Application number: 24211864.4
(22) Date of filing: 08.11.2024
(51) Int. Cl.: H02P 7/00, B60K 11/08, E05F 15/603, H02P 3/02, E05F 15/611, E05F 15/75

(54) **CONTROLLING OPERATION OF AN ACTUATABLE OBJECT**
STEUERUNG DES BETRIEBS EINES BETÄTIGBAREN OBJEKTS
COMMANDE DU FONCTIONNEMENT D'UN OBJET ACTIONNABLE

(30) Priority: 08.11.2023 NL 2036218
(43) Date of publication of application: 14.05.2025
(73) Proprietor: MCi (Mirror Controls International) Netherlands B.V., 3447 GK Woerden (NL)
(72) Inventor: HUIJZERS, Bastiaan, 3447 GK Woerden (NL)
(74) Representative: V.O.

(56) References cited:
- EP-B1- 3 554 875
- WO-A1-2023/018333
- DE-A1- 102016 220 151

## Description

### TECHNICAL FIELD

The various aspects and implementations thereof relate to operation and control of a hatch of a vehicle or another actuatable object.

### BACKGROUND

EP3554875 discloses operation of a flap of a fuel door. The supply or terminal voltage of an electromotor driving the flap is monitored, while the electromotor is not operated. If change in the voltage is detected, such is assumed to occur by virtue of an external force to be applied to the fuel door. Such external force may be pushing the flap to a closed position. Therefore, based on monitoring a voltage over the electromotor while the electromotor is not operated, is assumed to be a signal for initiating closing of the flap. Consequently, in response, a voltage is applied to the electromotor such that the flap moves in a direction in which it is forced.

WO 2023/018333 A1 discloses a method of controlling an electromotor of an actuator for controlling a position of an actuatable object of a vehicle. The method comprises receiving an instruction to hold position of the actuatable object, obtaining an initial hold voltage pattern for the electromotor and applying the initial hold voltage pattern to the electromotor. The method further comprises determining movement data on movement of the actuatable object, determining an adjusted hold voltage pattern based on the movement data and applying the adjusted hold voltage pattern to the electromotor. By applying a particular voltage to the electromotor, a magnetic force between rotor and stator may be created to counteract any external force. The voltage applied for holding the stator is determined on detection of any movement of the rotor.

DE 10 2016 220151 A1 discloses a method for moving a vehicle outer unit manually. The commutation ripples of a voltage signal are generated by a direct current motor in a generator operation. The commutation ripples are evaluated by a control device. The position of the vehicle outer unit is determined. The control device is activated by a direct current motor if the control device is in a rest mode at the beginning of the manual movement. The vehicle outer unit moves to the open position or closed position in dependence from the detected manual movement direction of the vehicle outer unit.

### SUMMARY

Monitoring the back-EMF (electromagnetic force) generally requires additional hardware for actuators. Second, smaller movements or slow movements may result in a back-EMF that is too low to detect. Therefore, an improved detection method is preferred for detecting movement initiated by virtue of an external force being applied to the hatch or another actuatable object.

Therefore, a first aspect provides a method of controlling movement of a hatch of an inlet for energy supply of a motorised vehicle between a first hatch position in which the inlet is covered by the hatch and a second hatch position in which the inlet is accessible for providing energy to the motorised vehicle, the hatch being operatively connected to a rotor of a DC electromotor. The method comprises applying a first voltage having a first voltage level to the windings of the electromotor, the first voltage level being lower than a threshold voltage level that is required for movement of the rotor, the application of the first voltage resulting a first current having a first current to flow through the windings and monitor the first current for one or more variations in the first current level. When the one or more variations detected in the first current satisfy at least one or more pre-determined criteria comprised by a set of pre-determined criteria, a second voltage is applied having a second voltage level that is higher than the threshold voltage level.

The hatch may be a hatch - or flap or cover - of or for an inlet for providing power to a vehicle, like petrol, Diesel, hydrogen or electrical power. Alternatively, the actuatable object may be bonnet of a vehicle. While the hatch is in a first position, an open position, a standby voltage may be applied such that the object does not move. That may be the case when the standby voltage results in a current is too small to overcome any friction within the electromotor. Alternatively, the standby voltage is negative, resulting in the actuatable object, so in this example the flap, being pushed against an abutment in the open position. When a larger voltage, a positive voltage, is applied, the hatch will move to the closed position. In this case, the polarity of the first voltage level is opposite to that of the second voltage level. And in case the first voltage level has the same level as the second voltage level, the first voltage level is very low.

While applying the first voltage level, a current will flow through the windings of the electromotor. While the hatch is stationary, the current will generally be constant. When the hatch is moved, for example by a human or by an object, the movement of the object will be transferred to the rotor of the electromotor. This, in turn, will result in ripples in the supply current, as the commutators are short circuited by a stationary brushed contact of the electromotor, resulting in a variation of resistance connected to the constant supply voltage at the first level.

These ripples or variations on the supply current may be monitored by a current sensor that is connected to a control unit or processing unit. If the variations satisfy at least one or more pre-determined criteria comprised by a set of pre-determined criteria, it is determined that the hatch is moved by an external force. Following this determination, the second voltage level is applied. In one example, the direction of movement detected is the same as resulting from applying the second voltage level. In another example, the movement resulting from applying the second voltage level is opposite from the movement detected. That is, if the direction of the movement is detected, though this is not a requirement in general.

An example of the first aspect further comprises determining a determined amount of variations, wherein a first pre-determined criterion comprised by the set of pre-determined criteria is a pre-determined amount of variations. An advantage of this example is that when a movement of the hatch is very small, for example caused by a vibration of a vehicle or other object to which the hatch is connected, result in only few amount of ripples, one to three or four or five, the supply voltage is not directly switched to the second level. Only when the amount of variations is high enough that there really is a movement as a result of the external force, the second voltage level is applied.

Another example further comprises determining a determined amount of variations, wherein a second pre-determined criterion comprised by the set of pre-determined criteria is a pre-determined level of the variations or a pre-determined amount of variations per unit of time. Generally, the level of the variations is determined by the level of resistance values of the windings. Yet, other factors may play a role as well that may be relevant for determining whether the hatch is moved and, optionally, how fast or with what force the hatch may be moved. Hence, this example may as such provide more accuracy in determining a movement of the hatch.

A further example further comprising determining a determined amount of variations, wherein the pre-determined level of the variations is a relative amount. In this example, the level of the variations as part of the set of criteria is set as a multiple or a ratio of the average supply current or of the constant supply current at the first voltage level, with no movement detected.

Yet another example further comprising determining a determined amount of variations, wherein the pre-determined level of the variations is an absolute amount. By applying this criterion, any small disturbances may be filtered out, which may increase robustness of the method.

In again another example, the first voltage level has a polarity opposite to that of the second voltage; and the application of the first voltage results in the hatch being forced to an abutment. An advantage of this example is that is may be used with a first voltage level at a practical level with electromotors having a very low friction, even when friction of the hatch is taken into account, that may even move at voltage level less than 1% of the standard supply voltage that may be used for the second supply voltage.

In again a further example, the absolute value of the first voltage level is lower than the absolute value of the second voltage level. One advantage of this example is efficiency of economy; the waiting state in which the first voltage level is applied may be significantly longer than an operational state during which the second supply voltage is applied.

In another example, the first voltage level has the same polarity that of the second voltage; and the first current generates an electromagnetic force in the rotor that is insufficient to overcome a mechanical friction force between the rotor and a housing of the DC electromotor. An advantage of this may be simplified technology for implementation, as no polarity switch may have to be made.

In again another example, the providing of the first voltage at the first level comprises providing a supply voltage having a supply voltage level and a duty cycle less than 1, and the average level of the supply voltage is substantially equal to the first voltage. By using pulse width modulation, an efficient way of generating the first voltage is provided, as compared to, for example, resistive voltage division, which results in dissipation of electrical power in resistances.

A further example further comprises determining a direction of movement of a movement of the rotor causing the variations in the first current level, wherein the second level of the second voltage is set to move the rotor in the direction of the determined movement. By obtaining information on a direction of the movement by means of the external force, information may be obtained on an intended direction for the hatch to be moved.

Again a further example further comprising determining a previous polarity of a previous level of the second voltage applied the last time for moving the rotor, wherein a second polarity of the second voltage is opposite to the previous polarity. This example may be practical if the hatch is movable in two directions, in particular between two extremities. If the previous action was towards a first extremity, for example an open position of a cover like a flap of an inlet or the bonnet, the other action will be towards the second extremity, with cover being in the closed position. The opening action will require a first polarity to be applied to the electromotor, the closing will required an opposite polarity to be applied.

A second aspect provides an actuator module arranged to drive a hatch of an energy inlet of a motorised vehicle comprised by the motorised vehicle between a first hatch position in which the inlet is covered by the hatch and a second hatch position in which the inlet is accessible for providing energy to the motorised vehicle. The actuator module comprises a control circuit comprising a voltage supply arranged to supply a first voltage and a second voltage to a DC electromotor having a rotor, resulting in, respectively a first current and a second current to flow through the windings of the electromotor, a current sensor arranged to monitor the first current for one or more variations in the first current level while the first voltage is applied, an evaluation module arranged to evaluate whether the one or more variations detected in the first current satisfy at least one or more pre-determined criteria comprised by a set of pre-determined criteria and to cause the voltage supply to apply the second voltage to the electromotor. In this control circuit, the first voltage level is lower than a threshold voltage level that is required for movement of the rotor; and the second voltage level is higher than the threshold voltage level.

The actuator module further comprises a DC electromotor having a rotor, a transmission comprising a gearbox connected to the rotor of the electromotor at a first end of the gearbox and a driving connected arranged to be coupled to the hatch at a second end of the gearbox, the gearbox being arranged to translate movement of the hatch to movement of the rotor and to translate movement of the rotor to movement of the hatch.

An example of the second aspect is further arranged to generate the first level of the first voltage using pulse width modulation of a supply voltage, wherein a duty cycle applied to the supply voltage is less than one, wherein the duty cycle multiplied by the supply voltage is substantially equal to the first voltage. One advantage of this example is efficiency of economy; the waiting state in which the first voltage level is applied may be significantly longer than an operational state during which the second supply voltage is applied.

Another example further comprises an smoothing circuit arranged to smooth the modulated supply voltage. This allows for a steady supply voltage at the first level. This, in turn, makes monitoring of the supply current resulting of applying the first voltage simpler and/or more accurate. Such smoothing circuit preferably comprises a reactive component, like a capacitance or an inductance. Such components generally have very little losses.

A third aspect provides a motorised vehicle comprising the module according to the second aspect and the hatch and the inlet for energy supply.

### BRIEF DESCRIPTION OF THE DRAWINGS

The various aspects and implementations thereof will now be discussed in further detail in conjunction with drawings. In the drawings:
- Figure 1:: shows a vehicle;
- Figure 2:: shows a power supply, an electromotor, a drive train and a drivable hatch; and
- Figure 3:: shows a flowchart.

### DETAILED DESCRIPTION

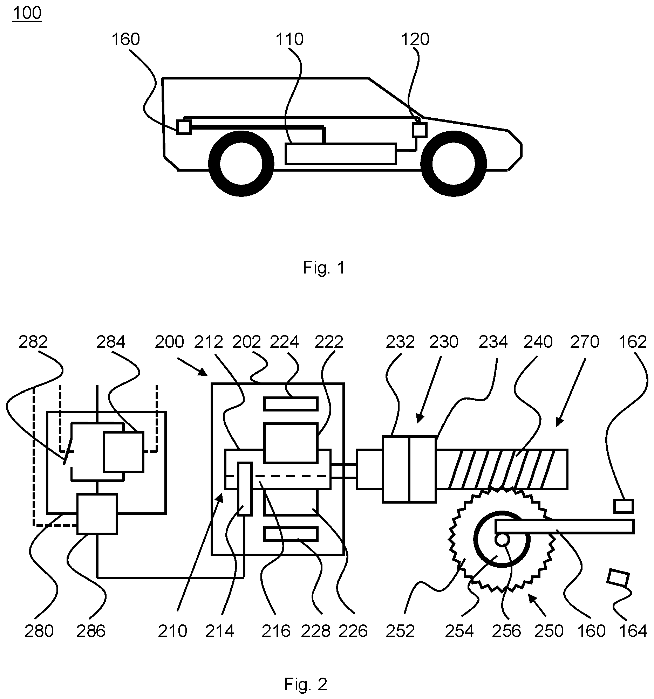

Figure 1 shows a car 100 as a motorised vehicle comprising a battery 110 as an energy storage. Alternatively or additionally, a fuel tank may be provided as energy storage. The car 100 further comprises a board computer 120 and a hatch 160 for closing an electrical inlet port for providing the battery 110 with electric energy. If the car 100 comprises a fuel tank, the hatch 160, another hatch or an additional hatch may be provided for closing an inlet for fuel, for providing fuel to the fuel tank

Figure 2 shows a hatch control module. The hatch control module comprises DC electromotor 200 that is coupled to the hatch 160 via a drive train 270 comprised by the hatch control module. The electromotor 200 comprises a housing 202, in which housing 202 a rotor 210 is provided. On the rotor 210, a first conductor 212 and a second conductor 214 are provided. Furthermore, one or more additional conductors may be provided on the rotor 210.

The conductors are provided for providing a current from a brush contact 216 to a first electromagnets 222 and a second electromagnet 226, provided as coils on the rotor 210. In other examples, one or more additional electromagnets may be provided on the rotor 210. In the housing 202, also a first permanent magnet 224 and a second permanent magnet 228 are provided. Thus, the DC electromotor 200 is a commonly known electromotor as generally commercially available. When a brush contact moves from the first conductor 212 to the second conductor 214, the conductors are briefly short circuited. This results in a change of resistance value of the electromotor 200 and this, in turn, results in a ripple or another variation in the current through the electromotor 200, while providing the same supply voltage.

The drivetrain 270 comprises a slip coupling 230 or a clutch, provided between the rotor 210 and a worm wheel 240. The drivetrain 270 further comprises a toothed wheel or a gear 250 that is preferably provided on an axle 258. The connection between the worm wheel 240 and the gear 250 allows for a signification reduction in rotational speed, preferably in the order or a factor 50. Yet, the drivetrain 270 is in this example provided such that it provided reciprocal functionality in the sense that movement of the hatch 160 results in movement of the rotor 210, via the drivetrain 270.

Adjacent to the hatch 160, a first abutment 162 is provided. The first abutment 162 is arranged for the hatch 160 to abut to and to stop movement of the hatch 160 upon abutment. Furthermore, a second abutment 164 is provided. The hatch 160 is arranged to rotate between the first abutment 162 and the second abutment 164. In this example, the maximum rotation is about 25°. In other example, the rotation between the abutments may be 90°, 180° or any other angle. In again another example, the movement of the hatch 160 is a linear movement between abutments or a combination between curved and linear movements.

The first slip coupling 230 comprises a first slip part 232 connected to the rotor 200 and a second slip part 234 connected to the worm wheel 240. In normal operation, the first slip part 232 and the second slip pat 234 rotate together. If the torque between the worm wheel 240 and the rotor 210 exceeds a pre-determined torque threshold, the second slip part 234 stalls and the first slip part 232 continues to rotate, in which operational state the slip coupling 230 is in slip mode. If the slip coupling 230 goes into slip, usually first the full drive train 270 will stall. Subsequently, the slip coupling 230 will run into slip mode. Depending on characteristics of contact surfaces of the first slip part 232 and the second slip part 234, the slip coupling 230 will stay in slip operation or alternate between slip and stall mode.

Additionally or alternatively, a second slip coupling is provided in the gear 250. The gear 250 comprises in this embodiment an outer ring 252 and an inner ring 254. Between the inner ring 252 and the outer ring 254, the second slip coupling 256 is provided. The operation of the second slip coupling 256 is similar to that of the first slip coupling 230. The hatch 160 is connected to the inner ring 256.

The hatch control module further comprises a voltage supply module 280. The voltage supply module comprises a switch 282, a pulse width modulator 284 and a current sensor 286. The switch 282 and the pulse width modulator 284 are connected to the board computer 220 for receiving control signals for operating the switch 282 and the pulse width modulator 284. The pulse width modulator 284 provides a voltage that is a fraction of the supply voltage, wherein the fraction is substantially equal to a duty cycle of the pulse width modulator 284. Hence, for providing a voltage that is a third of the voltage supplied to the pulse width modulator 284, a duty cycle of 33% may be applied. The pulse width modulator 284 may be provided with an equaliser circuit or smoothing circuit in order to provide an output at a substantially continuous level, rather than at a switching level. Such smoothing circuit may be embodied by means of a capacitor.

The current sensor 286 is connected to the board computer 120 for providing information about a level of a current provided by the voltage supply module 280 to the electromotor 200.

The switch 282 is preferably a switch capable of providing a supply voltage of the vehicle in two different polarities. For a standard car, this would mean that the switch 282 is arranged to provide 12 Volt or -12 Volt to the electromotor 200. The switch may also be positioned in an idle position, with no supply voltage being provided to the electromotor 200 by the switch 282.

Whereas in this example the electromotor 200 is used for actuating the hatch 160, in other embodiments other actuatable parts of a car or other motorised vehicle may be actuated. Such actuatable parts may be a full rear view module including mirror and mirror adjustment arrangements, rear view mirrors, shutters for a grille, actuatable spoilers or other air guiding flaps, screen wipers, doors, other, or a combination thereof.

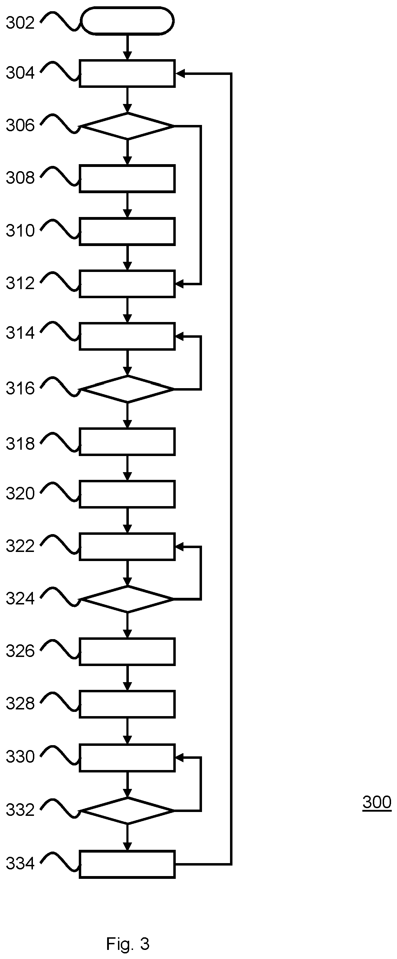

The further functionality of the hatch control module will be discussed in further detail in conjunction with a flowchart 300 shown by Figure 3. The various parts of the flowchart are briefly summarised in the list below.
- 302: start procedure
- 304: receive control signal
- 306: directional signal?
- 308: retrieve hatch position data
- 310: set direction
- 312: apply supply voltage for applicable direction
- 314: monitor the supply current for variations
- 316: is a first criterion met for the variations?
- 318: set position data
- 320: apply standby voltage
- 322: monitor standby current
- 324: is a second criterion met for the variations?
- 326: retrieve hatch position data
- 328: apply supply voltage in accordance with position data
- 330: monitor supply current variation
- 332: is a third criterion met for the variations?
- 334: apply standby current

The procedure starts in a terminator 302 and proceeds to step 304 in which a control signal is received for moving the hatch 160. In step 306 is checked whether the control signal comprises data on a direction for the hatch to be moved. Such direction may be either opening or closing the hatch 160, the direction may be indicated by setting a particular bit in a digital message to 0 or to 1. In another implementation, the signal is an analogous signal having a particular polarity and the applicable polarity indicates a direction.

If the control signal has direction information, the procedure jumps to step 312. If the control signal does not comprise direction information, the procedure proceeds to step 308. In step 308, data is retrieved from an electronic memory, which data indicates whether the hatch 160 is closed or opened. Such data may be a single bit or multiple bits. The electronic may be comprised by the board computer 120 or external thereto.

In step 310, a direction of the hatch 160 to move to is set, based on the retrieved position data. If the hatch 160 is in closed position, the hatch 160 is to be moved to opened position. And if the hatch 160 is in open position, the hatch 160 is to be moved to closed position. By setting the position, a voltage level of a voltage to be applied to the electromotor 200 is set. In particular, a polarity of the voltage to be applied is set. For example, applying a positive voltage to the electromotor 200 results in opening the hatch 160 and applying a negative voltage to the electromotor 200 results in closing the hatch 160.

If the control signal is a directional signal, the polarity of the signal is determined based on the directional information in the directional signal and no data is to be retrieved.

In step 312, the determined and set supply voltage is applied to the electromotor 200. The level of the voltage is sufficient to overcome any internal mechanical resistance within the electromotor 200. The level applied may have the same magnitude as an internal supply voltage of further electronic components in the vehicle 100, for example 5 Volt, 12 Volt or 24 Volt. In this case, the switch 282 is used for providing the supply voltage to the electromotor 200, with the applicable polarity, as discussed above.

In step 314, the supply current to the electromotor is monitored by means of the current sensor 286. In particular, the supply current is monitored for any ripples in the level of the current. While monitoring the supply current for ripples, it is in this example checked whether ripples occur. If no ripples occur anymore, a first criterion is met. Generally, no ripples will occur anymore if the rotor 210 of the electromotor 200 does not rotate anymore, while the supply current is still provided. In such case, the supply current will be continuous.

Absence of ripples while the supply voltage is still provided to the electromotor 200 may be an indication that the hatch 160 abuts the first abutment 162 or the second abutment. Hence, if the first criterion is met, the hatch 160 is opened or closed. Whether this first criterion is met, is checked in step 316. It is noted that the first criterion may, alternatively or additionally, be that the drive train 270 is in a slip-stall modus.

In another example, the first criterion is met if a particular, pre-determined amount of ripples have been counted. A particular amount of ripples accounts for a particular amount of rotations of the rotor 210 and as such, a particular amount of ripples accounts for a particular position of the hatch 160. The first criterion may be that such an amount of ripples is counted representing movement of the hatch 160 from the first abutment 162 to the second abutment 164. Hence, the definition of the first criterion depends on the particular implementation.

In again another example, the level of the ripples is to be determined as being more than a pre-determined value, which pre-determined value may either be an absolute value or a pre-determined ratio of the voltage supplied to the electromotor 200. Generally, with an electromotor having three commutators on the rotor, when a brush contact short circuits two commutators, the ohmic resistance of the windings is 75% of when a brush contacts only one commutator. Hence, with a constant voltage applied, current is a third higher when two commutators are shorted as compared to when not. In one example, ripples are only counted as ripples, if the ripples are between 20% and 50% of an average value of the motor current. In this way, other effects that may cause change of current are strongly reduced, if not eliminated. This, in turn, allows current effects to be measured that are solely an effect of change of brushes from one commutator to another.

If in step 316 is determined that the first criterion is met, position data is set and stored in step 318. The position data has been discussed above; this data indicates whether the hatch 160 is open or closed. Subsequently or in parallel, the electromotor 120 is provided with a standby voltage in step 320. The standby voltage has a standby voltage level that is substantially lower than the supply voltage that is provided to the electromotor 120 for rotating the hatch 160.

The standby voltage may be equal to or lower than 20% of the supply voltage, equal to or lower than 10% of the supply voltage, equal to or lower than 5% of the supply voltage, equal to or lower than 4% of the supply voltage, equal to or lower than 2% of the supply voltage, or between any of two of these voltage levels. Hence, the voltage is to have a non-zero value in order to generate a current in accordance with Ohm's law. The objective of applying a supply voltage is to have a current through the windings of the first electromagnets 222 and the second electromagnet 226, without the rotor 210 of the electromotor rotating.

This objective may be achieved in multiple ways. A first way is to apply a supply voltage that is at a level at which any field excited by the first electromagnets 222 and the second electromagnet 226 results in a force to the first permanent magnet 224 and the second permanent magnet 228 that is lower than a mechanical friction force to be overcome to rotate the rotor 120 relative to the housing of the electromotor 120. A second way is to set the standby voltage with a polarity such that a force applied by the electromotor 120 to the hatch 160 results in the hatch 160 being forced to either the first abutment 162 or the second abutment 164.

In the first case, the standby voltage should be very low, in particular with modern low-friction electromotors. Furthermore, in the first case, the polarity of the standby voltage is irrelevant. In the second case, the polarity of the standby voltage applied is relevant; the polarity of the standby voltage should be opposite to a further polarity of a supply voltage that is required to move the hatch 160 away from an abutment to which it is forced by virtue of the standby current.

In either way, with the supply voltage that is required to move the hatch 160 away from an abutment to which it is forced by virtue of the standby current being defined as having a positive polarity, the standby voltage should be at a level low enough to prevent the rotor 120 from rotating relative to the housing of the electromotor 120. This means that the standby voltage may be at a negative level or at a low positive level, as discussed above. The standby current is in this example provided by the pulse width modulator 284, in the first case, the second case or any other case that falls within the scope of the claims.

While the standby current is monitored in step 322, it is checked in step 324 whether a second criterion is met. In this embodiment, the second criterion is whether ripples occur in the standby current, or whether a particular, for example pre-determined amount of ripples have been detected. With the standby voltage provided at a level as discussed above, the rotor 210 does not rotate and no ripples occur in the supply current.

If ripples do occur in the standby current while the standby voltage is applied at a standby voltage level as discussed above, the rotor 210 is moved as a result of an external force being applied to the hatch 160. For example, if the hatch is in the open position, abutting the first abutment 162 and forced to move towards the second abutment, towards the closed position, the rotor 210 moves by virtue of the reciprocal functionality of the drivetrain 270. Also other signals in the supply current may, in other examples, be used as an indication that the hatch 160 is moved by means of an external force.

If the second criterion is met, a position of the hatch 160 is retrieved. Information about the position of the hatch may be retrieved from the electronic memory in which the position data was stored before, as discussed above. In another example, position data may be retrieved from the standby current while the hatch is being moved by virtue of the external force.

Based on the position data, in step 328, the supply voltage is provided to the electromotor 200 at a level to move the hatch 160 to a position opposite to the determined position. Alternatively, the supply voltage is provided to the electromotor 200 at a level to move the hatch 160 in a direction that may be derived from monitoring the standby current while the second criterion is met. In both cases, the level of the supply voltage may be the substantially the same.

While applying the supply voltage in step 328, the supply current is monitored 330. While monitoring the supply current, it is in step 332 checked whether a third criterion is met. The third criterion may, for example, be that no variations occur anymore in the supply current or whether a stall-slip modus is entered by the drivetrain 270. Such may be the result of the hatch 160 meeting the first abutment 162 or the second abutment 164, thus reaching an endpoint.

In another example, the third criterion is met if a particular, pre-determined amount of ripples have been counted. A particular amount of ripples accounts for a particular amount of rotations of the rotor 210 and as such, a particular amount of ripples accounts for a particular position of the hatch 160. The third criterion may be that such an amount of ripples is counted representing movement of the hatch 160 from the first abutment 162 to the second abutment 164.

Upon the third criterion being met, the standby voltage is applied to the electromotor 200 in step 334 at a standby voltage level as discussed above. Next, the procedure loops back to step 304, in which an input is monitored for a control signal. Such control signal may be an external control signal, for example generated by a user pushing a button. Additionally or alternatively, the control signal may be obtained by monitoring the standby current and detecting, during the monitoring, that a particular criterion is met by the standby current, for example as discussed above.

## Claims

1. A method of controlling movement of a hatch (160) of an inlet for energy supply of a motorised vehicle (100) between a first hatch position in which the inlet is covered by the hatch and a second hatch position in which the inlet is accessible for providing energy to the motorised vehicle, the hatch being operatively connected to a rotor (210) of a DC electromotor (200), **characterized in that** the method comprising:
applying a first voltage having a first voltage level to the windings of the electromotor, the first voltage level being lower than a threshold voltage level that is required for movement of the rotor, the application of the first voltage resulting in a first current having a first current to flow through the windings;
monitoring the first current for one or more variations in the first current level;
when the one or more variations detected in the first current satisfy at least one or more pre-determined criteria comprised by a set of pre-determined criteria, applying a second voltage having a second voltage level that is higher than the threshold voltage level.

2. The method according to claim 1, further comprising determining a determined amount of variations, wherein a first pre-determined criterion comprised by the set of pre-determined criteria is a pre-determined amount of variations.

3. The method according to claim 1 or claim 2, further comprising determining a determined amount of variations, wherein a second pre-determined criterion comprised by the set of pre-determined criteria is a pre-determined level of the variations.

4. The method according to claim 3, further comprising determining a determined amount of variations, wherein the pre-determined level of the variations is a relative level.

5. The method according to claim 3, further comprising determining a determined amount of variations, wherein the pre-determined level of the variations is an absolute level.

6. The method according to any of the preceding claims, wherein:
the first voltage level has a polarity opposite to that of the second voltage; and
the application of the first voltage results in the hatch being forced to an abutment.

7. The method according to claim 6, wherein the absolute value of the first voltage level is lower than the absolute value of the second voltage level.

8. The method according to any of the preceding claims, wherein
the first voltage level has the same polarity as that of the second voltage; and
the first current generates an electromagnetic force in the rotor that is insufficient to overcome a mechanical friction force between the rotor and a housing of the DC electromotor.

9. The method according to any of the preceding claims, wherein the providing of the first voltage at the first level comprises providing a supply voltage having a supply voltage level and a duty cycle less than 1, and the average level of the supply voltage is substantially equal to the first voltage.

10. The method according to any of the preceding claims, further comprising determining a direction of movement of a movement of the rotor causing the variations in the first current level, wherein the second level of the second voltage is set to move the rotor in the direction of the determined movement.

11. The method according to any of the claim 1 to 9, further comprising determining a previous polarity of a previous level of the second voltage applied the last time for moving the rotor;
wherein a second polarity of the second voltage is opposite to the previous polarity.

12. An actuator module arranged to drive a hatch (160) of an energy inlet of a motorised vehicle (100) comprised by the motorised vehicle between a first hatch position in which the inlet is covered by the hatch and a second hatch position in which the inlet is accessible for providing energy to the motorised vehicle, the actuator module
**characterized by**:
a control circuit comprising:
a voltage supply arranged to supply a first voltage and a second voltage to a DC electromotor (200) having a rotor. (210), resulting in, respectively a first current and a second current to flow through the windings of the electromotor;
a current sensor arranged to monitor the first current for one or more variations in the first current level while the first voltage is applied;
an evaluation module arranged to evaluate whether the one or more variations detected in the first current satisfy at least one or more pre-determined criteria comprised by a set of pre-determined criteria and to cause the voltage supply to apply the second voltage to the electromotor;
wherein:
the first voltage level is lower than a threshold voltage level that is required for movement of the rotor; and
the second voltage level is higher than the threshold voltage level;
a DC electromotor having a rotor;
a transmission comprising a gearbox connected to the rotor of the electromotor at a first end of the gearbox and a driving connector arranged to be coupled to the hatch at a second end of the gearbox, the gearbox being arranged to translate movement of the hatch to movement of the rotor and to translate movement of the rotor to movement of the hatch.

13. The actuator module according to claim 12, further arranged to generate the first level of the first voltage using pulse width modulation of a supply voltage, wherein a duty cycle applied to the supply voltage is less than one, wherein the duty cycle multiplied by the supply voltage is substantially equal to the first voltage.

14. The actuator module according to claim 13, further comprising a smoothing circuit arranged to smooth the modulated supply voltage.

15. A motorised vehicle comprising the module according to any of claim 12 to claim 14 and the hatch and the inlet for energy supply.

## Patentansprüche

1. Verfahren zur Steuerung der Bewegung einer Klappe (160) eines Einlasses für die Energieversorgung eines motorisierten Fahrzeugs (100) zwischen einer ersten Klappenposition, in welcher der Einlass durch die Klappe abgedeckt ist, und einer zweiten Klappenposition, in welcher der Einlass für die Energieversorgung des motorisierten Fahrzeugs zugänglich ist, wobei die Klappe betriebsmäßig mit einem Rotor (210) eines Gleichstrom-Elektromotors (200) verbunden ist, **dadurch gekennzeichnet, dass** das Verfahren Folgendes umfasst:
Anlegen einer ersten Spannung mit einem ersten Spannungspegel an die Wicklungen des Elektromotors, wobei der erste Spannungspegel niedriger ist als ein Schwellenspannungspegel, der für die Bewegung des Rotors erforderlich ist, wobei das Anlegen der ersten Spannung dazu führt, dass ein erster Strom mit einer ersten Stromstärke durch die Wicklungen fließt;
Überwachung des ersten Stroms hinsichtlich einer oder mehrerer Schwankungen des ersten Strompegels;
Anlegen einer zweiten Spannung mit einem zweiten Spannungspegel, der höher als der Schwellenspannungspegel ist, wenn die eine oder mehreren im ersten Strom erfassten Schwankungen mindestens ein oder mehrere vorbestimmte Kriterien erfüllen, die in einem Satz vorbestimmter Kriterien umfasst sind.

2. Verfahren nach Anspruch 1, welches ferner ein Bestimmen einer bestimmten Anzahl von Schwankungen umfasst, wobei ein erstes vorbestimmtes Kriterium, das in der Menge der vorbestimmten Kriterien umfasst ist, eine vorbestimmte Anzahl von Schwankungen ist.

3. Verfahren nach Anspruch 1 oder Anspruch 2, das ferner ein Bestimmen eines bestimmten Betrags von Schwankungen umfasst, wobei ein zweites vorbestimmtes Kriterium, das in der Menge der vorbestimmten Kriterien umfasst ist, ein vorbestimmtes Niveau der Schwankungen ist.

4. Verfahren nach Anspruch 3, das ferner ein Bestimmen einer bestimmten Menge von Schwankungen umfasst, wobei das vorbestimmte Niveau der Schwankungen ein relatives Niveau ist.

5. Verfahren nach Anspruch 3, das ferner ein Bestimmen einer bestimmten Menge von Schwankungen umfasst, wobei das vorbestimmte Niveau der Schwankungen ein absolutes Niveau ist.

6. Verfahren nach einem der vorhergehenden Ansprüche, wobei:
der erste Spannungspegel eine Polarität aufweist, die derjenigen der zweiten Spannung entgegengesetzt ist; und
das Anlegen der ersten Spannung dazu führt, dass die Klappe an ein Widerlager gedrückt wird.

7. Verfahren nach Anspruch 6, wobei der Absolutwert des ersten Spannungspegels niedriger ist als der Absolutwert des zweiten Spannungspegels.

8. Verfahren nach einem der vorhergehenden Ansprüche, wobei
der erste Spannungspegel die gleiche Polarität wie die zweite Spannung hat; und
der erste Strom eine elektromagnetische Kraft im Rotor erzeugt, die nicht ausreicht, um eine mechanische Reibungskraft zwischen dem Rotor und einem Gehäuse des Gleichstrom-Elektromotors zu überwinden.

9. Verfahren nach einem der vorhergehenden Ansprüche, wobei das Bereitstellen der ersten Spannung mit dem ersten Pegel das Bereitstellen einer Versorgungsspannung mit einem Versorgungsspannungspegel und einem Tastverhältnis von weniger als 1 umfasst und der Durchschnittspegel der Versorgungsspannung im Wesentlichen gleich der ersten Spannung ist.

10. Verfahren nach einem der vorhergehenden Ansprüche, das ferner ein Bestimmen einer Bewegungsrichtung einer Bewegung des Rotors, welche die Änderungen des ersten Strompegels verursacht, umfasst, wobei der zweite Pegel der zweiten Spannung so eingestellt wird, dass der Rotor in der Richtung der bestimmten Bewegung bewegt wird.

11. Verfahren nach einem der Ansprüche 1 bis 9, das ferner ein Bestimmen einer vorherigen Polarität eines vorherigen Pegels der zweiten Spannung, die beim letzten Mal zum Bewegen des Rotors angelegt wurde, umfasst;
wobei eine zweite Polarität der zweiten Spannung der vorherigen Polarität entgegengesetzt ist.

12. Aktuatormodul, das angeordnet ist, um eine Klappe (160) eines Energieeinlasses eines motorisierten Fahrzeugs (100), aufgewiesen durch das motorisierte Fahrzeug, zwischen einer ersten Klappenposition, in der der Einlass durch die Klappe abgedeckt ist, und einer zweiten Klappenposition, in welcher der Einlass zugänglich ist, um dem motorisierten Fahrzeug Energie zuzuführen, zu bewegen, wobei das Aktuatormodul **gekennzeichnet ist durch**:
eine Steuerschaltung, die Folgendes aufweist:
eine Spannungsversorgung, die so beschaffen ist, dass sie einem Gleichstrom-Elektromotor (200) mit einem Rotor (210) eine erste Spannung und eine zweite Spannung zuführt, was dazu führt, dass ein erster Strom bzw. ein zweiter Strom **durch** die Wicklungen des Elektromotors fließt;
einen Stromfühler, der so angeordnet ist, dass er den ersten Strom hinsichtlich einer oder mehrerer Schwankungen des ersten Strompegels überwacht, während die erste Spannung angelegt wird;
ein Auswertungsmodul, das so beschaffen ist, dass es auswertet, ob die eine oder die mehreren im ersten Strom erfassten Schwankungen mindestens ein oder mehrere vorgegebene Kriterien erfüllen, die von einem Satz vorgegebener Kriterien umfasst werden, und die Spannungsversorgung veranlasst, die zweite Spannung an den Elektromotor anzulegen;
wobei:
der erste Spannungspegel niedriger ist als ein Schwellenspannungspegel, der für die Bewegung des Rotors erforderlich ist; und
der zweite Spannungspegel höher ist als der Schwellenspannungspegel;
einen Gleichstrom-Elektromotor mit einem Rotor;
ein Getriebe, das einen mit dem Rotor des Elektromotors an einem ersten Ende des Getriebekastens verbundenen Getriebekasten und einen Antriebsverbinder aufweist, der so angeordnet ist, dass er mit der Klappe an einem zweiten Ende des Getriebekastens gekoppelt werden kann, wobei der Getriebekasten so angeordnet ist, dass er die Bewegung der Klappe in eine Bewegung des Rotors und die Bewegung des Rotors in eine Bewegung der Klappe übersetzt.

13. Aktuatormodul nach Anspruch 12, das ferner so beschaffen ist, dass es den ersten Pegel der ersten Spannung unter Verwendung einer Pulsbreitenmodulation einer Versorgungsspannung erzeugt, wobei ein an die Versorgungsspannung angelegtes Tastverhältnis kleiner als eins ist, wobei das Tastverhältnis multipliziert mit der Versorgungsspannung im Wesentlichen gleich der ersten Spannung ist.

14. Aktuatormodul nach Anspruch 13, das außerdem eine Glättungsschaltung zur Glättung der modulierten Versorgungsspannung aufweist.

15. Motorisiertes Fahrzeug mit dem Modul nach einem der Ansprüche 12 bis 14 und der Klappe und dem Einlass für die Energieversorgung.

## Revendications

1. Méthode de commande de mouvement d'une trappe (160) d'une entrée pour l'alimentation en énergie d'un véhicule motorisé (100) entre une première position de trappe dans laquelle l'entrée est couverte par la trappe et une seconde position de trappe dans laquelle l'entrée est accessible pour fournir de l'énergie au véhicule motorisé, la trappe étant reliée fonctionnellement à un rotor (210) d'un moteur électrique CC (200), **caractérisée en ce que** la méthode comprend :
l'application d'une première tension ayant un premier niveau de tension aux enroulements du moteur électrique, le premier niveau de tension étant inférieur à un niveau de tension seuil qui est nécessaire pour le mouvement du rotor, l'application de la première tension amenant un premier courant ayant un premier courant à circuler à travers les enroulements ;
la surveillance du premier courant à la recherche d'une ou plusieurs variations dans le premier niveau de courant ;
lorsque les une ou plusieurs variations détectées dans le premier courant satisfont à au moins un ou plusieurs critères prédéterminés compris dans un ensemble de critères prédéterminés, l'application d'une seconde tension ayant un second niveau de tension qui est supérieur au niveau de tension seuil.

2. Méthode selon la revendication 1, comprenant en outre la détermination d'une quantité déterminée de variations, dans laquelle un premier critère prédéterminé compris dans l'ensemble de critères prédéterminés est une quantité prédéterminée de variations.

3. Méthode selon la revendication 1 ou la revendication 2, comprenant en outre la détermination d'une quantité déterminée de variations, dans laquelle un second critère prédéterminé compris dans l'ensemble de critères prédéterminés est un niveau prédéterminé des variations.

4. Méthode selon la revendication 3, comprenant en outre la détermination d'une quantité déterminée de variations, dans laquelle le niveau prédéterminé des variations est un niveau relatif.

5. Méthode selon la revendication 3, comprenant en outre la détermination d'une quantité déterminée de variations, dans laquelle le niveau prédéterminé des variations est un niveau absolu.

6. Méthode selon l'une quelconque des revendications précédentes, dans laquelle :
le premier niveau de tension a une polarité opposée à celle de la seconde tension ; et
l'application de la première tension a pour résultat de forcer la trappe jusqu'à une butée.

7. Méthode selon la revendication 6, dans laquelle la valeur absolue du premier niveau de tension est inférieure à la valeur absolue du second niveau de tension.

8. Méthode selon l'une quelconque des revendications précédentes, dans laquelle le premier niveau de tension a la même polarité que celle de la seconde tension ; et
le premier courant génère une force électromagnétique dans le rotor qui est insuffisante pour surmonter une force de frottement mécanique entre le rotor et un boîtier du moteur électrique CC.

9. Méthode selon l'une quelconque des revendications précédentes, dans laquelle la fourniture de la première tension au premier niveau comprend la fourniture d'une tension d'alimentation ayant un niveau de tension d'alimentation et un cycle de service inférieur à 1, et le niveau moyen de la tension d'alimentation est sensiblement égal à la première tension.

10. Méthode selon l'une quelconque des revendications précédentes, comprenant en outre la détermination d'une direction de mouvement d'un mouvement du rotor provoquant les variations dans le premier niveau de courant, dans laquelle le second niveau de la seconde tension est réglé pour entraîner le mouvement du rotor dans la direction du mouvement déterminé.

11. Méthode selon l'une quelconque des revendications 1 à 9, comprenant en outre la détermination d'une polarité précédente d'un niveau précédent de la seconde tension appliquée la dernière fois pour entraîner le mouvement du rotor ;
dans laquelle une seconde polarité de la seconde tension est opposée à la polarité précédente.

12. Module d'actionneur agencé pour entraîner une trappe (160) d'une entrée d'énergie d'un véhicule motorisé (100) comprise dans le véhicule motorisé entre une première position de trappe dans laquelle l'entrée est couverte par la trappe et une seconde position de trappe dans laquelle l'entrée est accessible pour fournir de l'énergie au véhicule motorisé, le module d'actionneur étant **caractérisé par** :
un circuit de commande comprenant :
une source de tension agencée pour alimenter un moteur électrique CC (200) ayant un rotor (210) avec une première tension et une seconde tension, ce qui amène, respectivement, un premier courant et un second courant à circuler à travers les enroulements du moteur électrique ;
un détecteur de courant agencé pour surveiller le premier courant à la recherche d'une ou plusieurs variations dans le premier niveau de courant pendant que la première tension est appliquée ;
un module d'évaluation agencé pour évaluer si les une ou plusieurs variations détectées dans le premier courant satisfont à au moins un ou plusieurs critères prédéterminés compris dans un ensemble de critères prédéterminés et pour amener la source de tension à appliquer la seconde tension au moteur électrique ;
dans lequel :
le premier niveau de tension est inférieur à un niveau de tension seuil qui est nécessaire pour le mouvement du rotor ; et
le second niveau de tension est supérieur au niveau de tension seuil ; un moteur électrique CC ayant un rotor ;
une transmission comprenant une boîte de vitesses reliée au rotor du moteur électrique au niveau d'une première extrémité de la boîte de vitesses et un connecteur d'entraînement agencé pour être couplé à la trappe au niveau d'une seconde extrémité de la boîte de vitesses, la boîte de vitesses étant agencée pour transformer le mouvement de la trappe en mouvement du rotor et pour transformer le mouvement du rotor en mouvement de la trappe.

13. Module d'actionneur selon la revendication 12, agencé en outre pour générer le premier niveau de la première tension à l'aide d'une modulation de largeur d'impulsion d'une tension d'alimentation, dans lequel un cycle de service appliqué à la tension d'alimentation est inférieur à un, dans lequel le cycle de service multiplié par la tension d'alimentation est sensiblement égal à la première tension.

14. Module d'actionneur selon la revendication 13, comprenant en outre un circuit de lissage agencé pour lisser la tension d'alimentation modulée.

15. Véhicule motorisé comprenant le module selon l'une quelconque des revendications 12 à 14 ainsi que la trappe et l'entrée pour l'alimentation en énergie.
